Europäisches Patentamt

European Patent Office

Office européen des brevets

(11) Veröffentlichungsnummer : **0 054 770**
**B1**

(12) # EUROPÄISCHE PATENTSCHRIFT

(45) Veröffentlichungstag der Patentschrift :
03.04.85

(21) Anmeldenummer : 81110045.2

(22) Anmeldetag : 01.12.81

(51) Int. Cl.⁴ : **A 23 J   7/00**, C 07 F   9/10

(54) **Verfahren zur Abtrennung von Öl und/oder Phosphatidylethanolamin aus diese enthaltenden alkohollöslichen Phosphatidylcholin-Produkten.**

(30) Priorität : 13.12.80 DE 3047048

(43) Veröffentlichungstag der Anmeldung :
30.06.82 Patentblatt 82/26

(45) Bekanntmachung des Hinweises auf die Patenterteilung : 03.04.85 Patentblatt 85/14

(84) Benannte Vertragsstaaten :
AT BE CH FR GB IT LI LU NL SE

(56) Entgegenhaltungen :
DE-A- 2 915 614
CHEMICAL ABSTRACTS, Band 52, Nr. 12, 25. Juni 1958, Spalte 10613b, Columbus, Ohio, USA GIOVANNI DE ZOTTI et al.: "Column chromatography of soybean phosphatides"
CHEMICAL ABSTRACTS, Band 82, Nr. 23, 9. Juni 1975, Seite 526, Nr. 155382t, Columbus, Ohio, USA
Die Akte enthält technische Angaben, die nach dem Eingang der Anmeldung eingereicht wurden und die nicht in dieser Patentschrift enthalten sind.

(73) Patentinhaber : A. Nattermann & Cie. GmbH
Nattermannallee 1
D-5000 Köln 30 (DE)

(72) Erfinder : Bernd-Rainer, Günther, Dr.
Auf der Höhe 31
D-5010 Bergheim-Fliesteden (DE)

(74) Vertreter : Redies, Bernd, Dr. rer. nat. et al
Redies, Redies, Türk & Gille Brucknerstrasse 20
D-4000 Düsseldorf 13 (DE)

EP 0 054 770 B1

**Beschreibung**

Die Erfindung betrifft ein neues Verfahren zur Abtrennung von Öl und/oder Phosphatidylethanolamin aus diese enthaltenden alkohollöslichen Phosphatidylcholin-Produkten unter Gewinnung von hochreinem Phosphatidylcholin durch Chromatographie an Kieselgel.

Die bei der Speiseölherstellung anfallenden pflanzlichen Rohphosphatide enthalten neben Phosphatidylcholin Phosphatidylethanolamin und Mono-, Di- und Triglyceride (Öl) sowie Phosphatidylinosit und andere phosphorhaltige Glycerinester und Substanzen wie Peptide, Aminosäuren, Sterine, Sterinester, freie Fettsäuren und Kohlenhydratderivate. Für den Einsatz in der pharmazeutischen Industrie wird insbesondere ölfreies und Phosphatidylethanolamin-freies, hochreines Phosphatidylcholin benötigt.

Für die Abtrennung der im Rohphosphatid enthaltenen Begleitsubstanzen sind schon mehrere Verfahren beschrieben. In der Regel wird das pflanzliche Rohphosphatid in einem ersten Schritt in Aceton entölt (DE-AS 1 053 299, US-PS 3 268 335, DE-AS 1 047 597) und dann im zweiten Schritt mit Ethanol extrahiert (US-PS 2 724 649). Im dritten Schritt wird die ethanollösliche Phosphatidfraktion einer Säulenchromatographie bei Temperaturen unterzogen, die 35 °C nicht übersteigen (US-PS 3 031 478). Bei der acetonischen Entölung werden in geringen Mengen Acetonfolgeprodukte wie Mesityloxid, Diacetonalkohol, Phoron u. a. gebildet. Die Entfernung dieser toxischen und wegen ihres charakteristischen Eigengeruchs störend wirkenden Substanzen ist sehr aufwendig, zum Teil sogar unmöglich. Außerdem ist die acetonische Entölung mit einem Anstieg der Peroxide verbunden, deren nachteilige physiologische Einflüsse bekannt sind.

Die alkoholische Extraktion von pflanzlichen Rohphosphatiden führt zu einer ölhaltigen Phosphatidfraktion (DE-OS 2 718 797, DE-PS 1 492 952, DE-AS 1 692 568), aus der nach chromatographischer Behandlung bei Raumtemperatur ein ölhaltiges, Phosphatidylethanolamin-freies Phosphatidylcholin gewonnen werden kann. Nach einer eigenen Patentanmeldung (P 30 23 814.3) gelingt es, durch Zugabe einer geringen Wassermenge das Öl abzuscheiden und ein hochgereinigtes ölfreies Phosphatidylcholin zu gewinnen. Insgesamt stellt aber auch diese wässrige Entölung, die sich zur Herstellung bestimmter Phosphatidfraktionen gut eignet, bei der Gewinnung von ölfreiem Phosphatidylcholin einen Dreistufenprozeß (Extraktion, Chromatographie, Entölung) dar, der zudem mit der Aufarbeitung wässriger Ethanollösungen behaftet ist.

Die Gewinnung von reinem Phosphatidylcholin setzt eine chromatographische Abtrennung der in der ethanollöslichen Phosphatidfraktion enthaltenen Begleitsubstanzen voraus. Als Adsorptionsmittel wird im wesentlichen Aluminiumoxid eingesetzt. Die Reinigung erfolgt sowohl säulenchromatographisch als auch durch Rühren mit dem Trennmittel, jeweils bei Raumtemperatur.

Im technischen Maßstab wird basisches Aluminiumoxid eingesetzt. Auch hier wird die Chromatographie stets bei Raumtemperatur durchgeführt. Da das Aluminiumoxid nach der Chromatographie mit den Verunreinigungen, insbesondere mit Phosphatidylethanolamin, belegt ist, muß es verworfen werden. Ein weiterer Nachteil liegt in der Bildung von Lysophosphatidylcholin während der Chromatographie (O. Renkonen, J. Lipid. Res. *3*, 181-3 (1962), D. Van Damme et al., Int. Symp. Chromatogr. Elektrophoresis, 5th, 1968 (Pub. 1969), 268-78).

Der Chromatographie über Kieselgel kommt bisher nur analytische und präparative Bedeutung zu. So werden Phosphatide in Hexanlösungen von Kieselgel nicht adsorbiert (JA 77 012 202, US-PS 3 869 482), während sie in alkoholischen Lösungen von Kieselgel zurückgehalten werden (H. Richter et al., Pharmazie, 1977, 32 (3), 164). Das unterschiedliche Vershalten ist mit der Bildung lipophiler, polymolekularer Phosphatidmicellen in Hexan gegenüber den molekular vorliegenden Phosphatiden in Alkohol zu erklären. Die Chromatographie wird auch hier bei Raumtemperatur durchgeführt. Die Trennung und selektive Desorption der Phosphatide erfolgt bei Verwendung alkoholischer Phosphatidlösungen entweder mit Alkohol/Ammoniak (JA 49 093 400) oder mit Gemischen aus Chloroform/Methanol (C.H. Lea et al., Biochem. J. *60*, 353-63 (1965)) bzw. Chloroform/Methanol/Wasser (DDR-PS 79 916). Diese Verfahrensweise hatte bisher keine technische Bedeutung, da als Elutionsmittel immer Gemische toxischer Substanten, wie Ammoniak oder Chloroform, verwendet wurden, deren Wiedergewinnung und Entfernung aus dem Lecithin sehr aufwendig ist.

Handelsübliche Phosphatidylcholin-Rohprodukte, insbesondere aus Sojabohnenphosphatiden stellen durch Extraktion mit Alkohol gewonnene Produkte dar, die alkohollöslich sind und Öl und Phosphatidylethanolamin als Hauptverunreinigung enthalten. Es gibt jedoch auch Phosphatidylcholin-Rohprodukte, die, wie beschrieben, nur noch die eine oder andere der beiden Hauptverunreinigungen enthalten. Der vorliegenden Erfindung liegt die Aufgabe zugrunde, ein Verfahren zur Abtrennung von Öl und/oder Phosphatidylethanolamin aus diese enthaltenden alkohollöslichen Phosphatidylcholin-Produkten unter Herstellung von hochreinem, von diesen Verunreinigungen befreitem Phosphatidylcholin zu entwickeln. Allen bisher beschriebenen Verfahren haftet der Nachteil an, daß sie zur Darstellung eines reinen, öl- und Phosphatidylethanolamin-freien Produktes umständliche Verfahrensschritte erfordern, wobei mit der Bildung oder dem Verbleib toxischer Produkte zu rechnen ist. Das bei chromatographischer Reinigung eingesetzte Aluminiumoxid mußte dazu verworfen werden.

Es wurde nun überraschenderweise festgestellt, daß man aus alkohollöslichen, Öl und/oder Phosphatidylethanolamin enthaltenden Phosphatidfraktionen mittels einer Kieselgel-Säulenchromatographie bei höheren Temperaturen ein öl- und Phosphatidylethanolamin-freies, hochreines Phosphatidylcholin erhält.

Das erfindungsgemäße Verfahren zur Abtrennung von Öl und/oder Phosphatidylethanolamin aus diese enthaltenden alkohollöslichen Phosphatidylcholin-Produkten unter Herstellung von öl- und Phosphatidylethanolaminfreiem Phosphatidylcholin ist dadurch gekennzeichnet, daß man die Lösung des Öl und/oder Phosphatidylethanolamin enthaltenden alkohollöslichen Phosphatidylcholin-Produktes in einem $C_{1-4}$-Niederalkanol, gegebenenfalls gemischt mit bis zu 20 Vol.% Wasser, bei einer Temperatur im Bereich von 60 bis 90 °C auf eine Säule aus Kieselgel gibt, bei dieser Temperatur mit einem gegebenenfalls bis zu 20 Vol.% Wasser enthaltendem $C_{1-4}$-Niederalkanol die Säule oder einem solchen Gemisch aus mehreren $C_{1-4}$-Niederalkanolen eluiert und dabei einen das abzutrennende Öl und/oder Phosphatidylethanolamin enthaltenden Vorlauf und getrennt hiervon den das reine Phosphatidylcholin enthaltenden Restlauf sammelt und das Lösungsmittel aus dem Restlauf in üblicher Weise abtrennt.

Vorzugsweise wird die Aufgabe auf die Kieselgel-Säule und ihre Eluierung bei einer Temperatur im Bereich von 60 bis 70 °C, durchgeführt. Bevorzugt wird als Eluierungsmittel das verwendete Lösungsmittel eingesetzt, was das Verfahren besonders einfach gestaltet. Bevorzugter $C_{1-4}$-Niederalkanol ist Ethanol.

Die Menge Vorlauf hängt von dem eingesetzten Phosphatidylcholin-Produkt ab. Durch einfach analytische Methoden läßt sich feststellen, ab wann das Eluat frei von den abzutrennenden Begleitprodukten ist und praktisch nur noch Phosphatidylcholin enthält. Nach der Erfahrung macht der Vorlauf etwa 20 bis 25 % des Gesamtvolumens an Eluat aus. Im Vorlauf befinden sich je nach eingesetztem Phosphatidylcholin-Produkt auch die anderen üblicherweise anwesenden Begleitsubstanzen wie Sterine, Sterinderivate, Glycolipide und Phospholipide, die einer Weiterverwendung zugeführt werden können.

Als Kieselgel können übliche Produkte für die Chromatographie verschiedener Körnung oder auch gepreßtes Kieselgel, welches aktiviert oder desaktiviert sein kann, eingesetzt werden. Bevorzugt werden neutrale Kieselgel-Produkte verwendet.

Das erfindungsgemäße Verfahren kann bei Normaldruck oder auch Überdruck durchgeführt werden. Ein ganz besonderer Vorteil des erfindungsgemäßen Verfahrens besteht darin, daß man das Kieselgel nach erfolgter Chromatographie immer wieder einsetzen kann. Sämtliche Verunreinigungen werden im Vorlauf aufgefangen ; nach dem Hauptlauf verbleibt nur noch eine geringe Restbelegung von Phosphatidylcholin.

Ein weiterer Vorteil des Kieselgels liegt in der sehr hohen Belastbarkeit dieses Sorptionsmittels. So werden in einer säulenchromatographischen Trennung mit 100 Teilen Kieselgel ca. 60 Teile Feststoff aus der alkohollöslichen Phosphatidfraktion getrennt.

Als Phosphatidylcholin-Produkte können durch Extraktion mit Alkohol aus z. B. Soja, Erdnuß, Sonnenblumen oder Raps gewonnene verwendet werden. Das Phosphatid wird mit einem niedermolekularen aliphatischen Alkohol, wie z. B. Methanol, Ethanol, n-Propanol oder Isopropanol, insbesondere aber mit 94 bis 96 Vol.%-igem Ethanol gelöst. Die Lösung wird vom Sediment befreit und die klare Alkoholphase so oder in Form eines Konzentrats dem erfindungsgemäßen Verfahren zugeführt. Es kann das bei der Extraktion verwendete Lösungsmittel ganz entfernt werden und das erhaltene Produkt erneut in einem oder mehreren, gegebenenfalls bis zu 20 Vol.% Wasser enthaltendem $C_{1-4}$-Niederalkanol gelöst werden.

Die Gewinnung von reinem Phosphatidylcholin aus sowohl Öl wie Phosphatidylethanolamin enthaltenden Phosphatidylcholin-Rohprodukten wird gegenüber den bekannten Verfahren insbesondere durch die Zusammenlegung der Verfahrensschritte Entölung und Reinigung vereinfacht. Ein weiterer Vorteil, der auch bei Einsatz von Phosphatidylcholin-Produkten gegeben ist, aus denen schon der eine der beiden Begleitsubstanzen in anderer Weise abgetrennt ist, ist durch die Wiederverwendung des Kieselgels gegeben.

## Beispiele

### Analytik

Die Phosphatide wurden auf dünnschichtchromatographischem Weg analysiert. Der Ölgehalt wurde dem Dialysierbaren gleichgesetzt. Das Wasser wurde nach Karl Fischer und der Restethanolgehalt gaschromatographisch bestimmt.

### Säulenchromatographie

Es wurde eine Doppelmantelchromatographiersäule (Innendurchmesser 4,5 cm, Höhe 37 cm) eingesetzt. Der Säule vorgeschaltet war ein Wärmeaustauscher, um eine gleiche Säulen- und Aufgabetemperatur zu gewährleisten. Die Säule wurde mit einer Aufschlämmung von 200 g Kieselgel (Merck) in dem jeweils angegebenen Lösungsmittel gefüllt. Nach erfolgter Chromatographie kann das Kieselgel wieder benutzt werden.

**0 054 770**

Ausgangsmaterial

Sojarohphosphatid wird bei 35 °C mit 95 Vol-%igem Ethanol im Gewichtsverhältnis 1 : 2,5 (Rohphosphatid : Ethanol) extrahiert. Das Sediment wird bei Raumtemperatur von der überstehenden Ethanolphase abgetrennt. Die Ethanolphase wird eingedampft. Der dabei erhaltenen Feststoff hat folgende Zusammensetzung :

| | |
|---|---|
| Phosphatidylcholin (PC) : | 43 % |
| Phosphatidylethanolamin (PE) : | 12 % |
| Öl : | 21 % |

Dieser Feststoff wurde für die Beispiele 1 bis 4 eingesetzt.
Der im Beispiel 5 verwendete Feststoff wurde wie folgt hergestellt :
Sojarohphosphatid wird mit Aceton entölt und danach mit 95 Vol.%-igem Ethanol extrahiert. Die ethanollösliche Phosphatidfraktion wird eingedampft und analysiert :

| | |
|---|---|
| PC-Gehalt : | 52 % |
| PE-Gehalt : | 20 % |

Das in Beispiel 6 eingesetzte ölhaltige Phosphatidylethanolamin-freie Phosphatidylcholin wurde entsprechend DE-OS 2 718 797 (Beispiel 3) hergestellt.

| | |
|---|---|
| PC-Gehalt : | 68 % |
| Öl-Geshalt : | 28 % |

### Beispiel 1

Es wird eine Säulenchromatographie bei erhöhter Temperatur durchgeführt :

Säulenauftrag : 118 g Feststoff in 275 g 95 Vol.%-igem Ethanol
Elutionsmittel : 95 Vol.%-iges Ethanol für 4 l Eluat
Säulentemperatur : 70 °C

Nach 1 l Vorlauf werden insgesamt 3 l Hauptlauf aufgefangen. Der Hauptlauf wird eingedampft und analysiert.

| | |
|---|---|
| Feststoffausbeute : | 34 % d. Th. |
| PC-Gehalt : | 92 % |
| PE-Gehalt : | < 1 % |
| Öl-Gehalt : | < 1 % |
| PC-Ausbeute bezogen auf Ausgangsfeststoff : | 72 % d. Th. |

### Beispiel 2

Säulenauftrag : 118 g Feststoff in 1 280 g 95 Vol-%igem Ethanol
Elutionsmittel : 95 Vol.-%iges Ethanol für 4 l Eluat
Säulentemperatur : 65 °C

Nach 2 l Vorlauf werden insgesamt 2 l Hauptlauf aufgefangen. Der Hauptlauf wird eingedampft und analysiert.

| | |
|---|---|
| Feststoffausbeute : | 22 % d. Th. |
| PC-Gehalt : | 90 % |
| PE-Gehalt : | < 1 % |
| Öl-Gehalt : | < 1 % |
| PC-Ausbeute bezogen auf Ausgangsfeststoff : | 46 % d. Th. |

### Beispiel 3

Säulenauftrag : 118 g Feststoff in 29 g 95 Vol-%igem Ethanol
Elutionsmittel : 95 Vol.-%iges Ethanol für 4 l Eluat
Säulentemperatur : 65 °C

Nach 0,5 l Vorlauf werden insgesamt 3,5l Hauptlauf aufgefangen. Der Hauptlauf wird eingedampft und analysiert :

4

| Feststoffausbeute : | 38 % d. Th. |
| PC-Gehalt : | 87 % |
| PE-Gehalt : | < 1 % |
| Öl-Gehalt : | < 1 % |
| PC-Ausbeute bezogen auf Ausgangsfeststoff : | 77 % d. Th. |

### Beispiel 4

Säulenauftrag : 118 g Feststoff in 50 g n-Propanol

Elutionsmittel : n-Propanol für das erste Eluat (1 l), danach 85 Vol-%iges wässriges n-Propanol für 3 l Eluat

Säulentemperatur : 90 °C

Nach 1 l Vorlauf werden 3 l Hauptlauf (85 Vol-%iges n-Propanol aufgefangen. Der Hauptlauf wird eingedampf und analysiert :

| Feststoffausbeute : | 45 % d. Th. |
| PC-Gehalt : | 86 % |
| PE-Gehalt : | < 1 % |
| Öl-Gehalt : | < 1 % |
| PC-Ausbeute bezogen auf Ausgangsfeststoff : | 90 % d. Th. |

### Beispiel 5

Säulenauftrag : 110 g Feststoff (ethanollösliche Fraktion aus entöltem Sojarohphosphatid) in 40 g 95 Vol-%igem Ethanol

Elutionsmittel : 95 Vol.-%iges Ethanol für 4 l Eluat

Säulentemperatur : 65 °C

Nach 1 l Vorlauf werden 3 l Hauptlauf aufgefangen. Der Hauptlauf wird eingedampft und analysiert.

| Feststoffausbeute : | 34 % d. Th. |
| PC-Gehalt : | 92 % |
| PE-Gehalt : | < 1 % |
| Öl-Gehalt : | < 1 % |
| PC-Ausbeute bezogen auf Ausgangsfeststoff : | 60 % d. Th. |

### Beispiel 6

Säulenauftrag : 80 g Feststoff (hergestellt nach der DE-OS 27 18 797, Beispiel 3) in 30 g 95 Vol.%-igem Ethanol

Elutionsmittel : 95 Vol.%-iges Ethanol für 4 l Eluat

Säulentemperatur : 65 °C

Nach 1 l Vorlauf werden 3 l Hauptlauf (Restlauf) aufgefangen. Der Hauptlauf wird eingedampft und analysiert.

| Feststoffausbeute : | 44 % d. Th. |
| PC-Gehalt : | 93 % |
| Ölgehalt : | < 1 % |
| PC-Ausbeute bezogen auf Ausgangsfeststoff : | 75 % d. Th. |

### Ansprüche

1. Verfahren zur Abtrennung von Öl und/oder Phosphatidylethanolamin aus diese enthaltenden, alkohollöslichen Phosphatidylcholin-Produkten unter Herstellung von öl- und Phosphatidylethanolaminfreiem Phosphatidylcholin, dadurch gekennzeichnet, daß man die Lösung des Öl und/oder Phosphatidylethanolamin enthaltenden alkohollöslichen Phosphatidylcholin-Produktes in einem $C_{1-4}$-Niederalkanol, gegebenenfalls gemischt mit bis zu 20 Vol.% Wasser, oder einem solchen Gemisch mehrerer $C_{1-4}$-Niederalkanole, bei einer Temperatur im Bereich von 60 bis 90 °C auf eine Säule aus Kieselgel gibt, bei dieser Temperatur mit einem gegebenenfalls bis zu 20 Vol.% Wasser enthaltenden $C_{1-4}$-Niederalkanol die Säule oder einem solchen Gemisch aus mehreren $C_{1-4}$-Niederalkanolen eluiert und dabei einen das abzutrennende Öl und/oder Phosphatidylethanolamin enthaltenden Vorlauf und getrennt hiervon den das reine Phosphatidylcholin enthaltenden Restlauf sammelt und das Lösungsmittel aus dem Restlauf in üblicher Weise abtrennt.

2. Verfahren gemäß Anspruch 1, dadurch gekennzeichnet, daß man zur Lösung des zu reinigenden Phosphatidylcholin-Produktes und zur Eluierung das gleiche Lösungsmittel verwendet.

3. Verfahren gemäß Anspruch 1-2, dadurch gekennzeichnet, daß man als $C_{1-4}$-Niederalkanol Ethanol verwendet.

## Claims

1. A process for the separation of oil and/or phosphatidylethanolamine from alcoholic soluble phosphatidylcholin products containing them, thus producing phosphatidylcholin free of oil and phosphatidylethanolamine characterized in that the solution of the alcohol soluble phosphatidylcholin product containing the oil and/or phosphatidylethanolamine, in a lower alkanol containing from 1 to 4 carbon atoms or in a mixture of several of such lower alkanols, said lower alkanol or mixture of alkanols being optionally admixed with up to 20 % by volume of water, is applied to the head of a chromatography column of silicic acid gel at a temperature ranging from 60 to 90 °C, eluting the column at this temperature with a lower alkanol having from 1 to 4 carbon atoms or a mixture of several of such lower alkanols, said lower alkanol or mixture of alkanols optionally containing up to 20 % by volume water, recovering initially a prefraction containing the oil and/or phosphatidylethanolamine to be separated and then recovering separately the main fraction containing the pure phosphatidylcholin, and separating the solvent from the main fraction in usual manner.

2. Process according to claim 1, characterized in that the same solvent is used for dissolving the phosphatidylcholin product to be purified and for the elution of the column.

3. Process according to claims 1 and 2, characterized in that ethanol is used as lower alkanol having from 1 to 4 carbon atoms.

## Revendications

1. Procédé pour séparer l'huile et/ou la phosphatidyléthanolamine à partir des produits de phosphatidylcholine solubles dans l'alcool qui les contiennent pour préparer de la phosphatidylcholine exempte d'huile et de phosphatidyléthanolamine, caractérisé en ce qu'on place sur une colonne de gel de silice à une température comprise entre 60 et 90 °C la solution du produit de phosphatidylcholine soluble dans l'alcool qui contient l'huile et/ou la phosphatidyléthanolamine dans un alcanol en $C_{1-4}$, le cas échéant mélangé avec de l'eau jusqu'à 20 % en volume, ou dans un mélange d'alcanols inférieurs en $C_{1-4}$, puis on élue la colonne à cette température par un alcanol inférieur en $C_{1-4}$ pouvant contenir le cas échéant jusqu'à 20 % en volume d'eau ou par un mélange de plusieurs alcanols inférieurs en $C_{1-4}$, et ainsi on recueille l'éluat de tête qui contient l'huile et/ou la phosphatidyléthanolamine à séparer puis l'éluat de queue à part qui contient la phosphatidylcholine pure et on sépare le solvant de l'éluat de queue de la façon habituelle.

2. Procédé selon la revendication 1, caractérisé en ce qu'on utilise le même solvant pour la dissolution du produit de phosphatidylcholine à purifier et pour l'élution.

3. Procédé selon les revendications 1 et 2, caractérisé en ce qu'on utilise l'éthanol comme alcool inférieur en $C_{1-4}$.